# EUROPÄISCHE PATENTSCHRIFT

(11) **EP 3 231 253 B1**
(45) Veröffentlichungstag und Bekanntmachung des Hinweises auf die Patenterteilung: **01.04.2020**
(21) Anmeldenummer: 15797697.8
(22) Anmeldetag: 23.11.2015
(51) Int. Cl.: H05B 33/08

(54) **TREIBERSCHALTUNG MIT LLC-ANLAUFSTEUERUNG**
DRIVER CIRCUIT WITH LLC START-UP CONTROL
CIRCUIT D'ATTAQUE À COMMANDE DE DÉMARRAGE LLC

(30) Priorität: 11.12.2014 DE 102014225600
(43) Veröffentlichungstag der Anmeldung: 18.10.2017
(73) Patentinhaber: Tridonic GmbH & Co. KG, 6851 Dornbirn (AT)
(72) Erfinder: NESENSOHN, Christian, 6840 Götzis (AT); EGLE, Manuel, 6845 Hohenems (AT)
(74) Vertreter: Rupp, Christian
(86) Internationale Anmeldenummer: PCT/EP2015/077345
(87) Internationale Veröffentlichungsnummer: WO 2016/091568

(56) Entgegenhaltungen:
- WO-A1-2010/115976
- WO-A1-2013/092656
- DE-A1-102010 031 233
- US-A1- 2011 164 437
- US-A1- 2012 176 816
- US-A1- 2013 271 040
- ANONYMOUS: "AN-9729. LED Application Design Guide Using Half-Bridge LLC Resonant Converter for 100W Street Lighting", INTERNET CITATION, 16. November 2012 (2012-11-16), Seiten 1-14, XP002707759, Gefunden im Internet: URL:http://www.fairchildsemi.com/an/AN/AN- 9729.pdf [gefunden am 2013-07-30]

## Beschreibung

Die Erfindung bezieht sich auf eine Treiberschaltung für den Betrieb wenigstens eines Leuchtmittels, insbesondere wenigstens einer LED, auf eine Leuchte mit einer solchen Treiberschaltung sowie auf ein Verfahren zum Betrieb der Treiberschaltung.

Aus dem Stand der Technik sind Treiberschaltungen zum Betreiben von Leuchtmitteln, insbesondere von LEDs, grundsätzlich bekannt. Eine bekannte Treiberschaltung wird dabei von einer elektrischen Versorgung aus versorgt, z.B. von einer Wechselspannung und insbesondere einer Netzspannung, und umfasst einen Resonanzkreis, der bspw. Teil einer LLC-Schaltung ist. Ein Übertrager ist vorgesehen, um elektrische Energie über eine galvanische Barriere hinweg zu übertragen, von einer Primärseite des Übertragers bzw. der Treiberschaltung auf eine Sekundärseite des Übertragers bzw. der Treiberschaltung. Die galvanische Barriere teilt also im Wesentlichen die Treiberschaltung in eine ausgehend von der elektrischen Versorgung versorgte Primärseite und in eine ausgehend von der Sekundärseite des Übertragers versorgte Sekundärseite. Ziel der Energieübertragung ist typischerweise die Versorgung des Leuchtmittels auf der Sekundärseite, insbesondere mit einem Betriebsstrom. Die LLC-Schaltung weist vorzugsweise zwei Wicklungen/Spulen auf, von denen eine als Primärwicklung des Übertragers, im Folgenden auch LLC-Übertrager genannt, fungiert.

Bei den bekannten Treiberschaltungen existiert indessen das Problem, dass beim Einschalten der Treiberschaltung die LLC-Schaltung und somit insgesamt der LLC-Übertrager mit einer hohen Frequenz von bspw. 200 kHz gestartet wird. Bei dieser hohen Frequenz kann es vorkommen, dass die Ausgangsspannung des LLC-Übertragers so hoch ist, dass die sich am Leuchtmittel ergebende Spannung die maximale Spannung, die für das Leuchtmittel zulässig ist, überschreitet. Es kann also unmittelbar nach dem Starten der Treiberschaltung und damit beim Anlaufen des LLC-Übertragers aufgrund einer Gütekurve des resonanten Übertragers am Ausgang der Treiberschaltung zu einer solchen unerwünschten Spannung kommen. Bei einem Leuchtmittel, das eine relativ niedrige Durchbruchsspannung aufweist, wie bspw. bei einer LED, kann so ein wahrnehmbarer Lichtblitz beim Anschalten der Treiberschaltung bzw. beim Anlaufen des LLC-Übertragers erzeugt werden, was ein für den Benutzer unerwünschtes Verhalten darstellt. Es kann jedoch auch dazu kommen, dass das Leuchtmittel beschädigt oder zerstört wird, da ein entsprechend hoher Strom durch das Leuchtmittel fließt. Die Patentschriften US 2012/0176816 und US 2011/0164437 offenbaren einen Gleichspannungswandler mit einer LLC-Schaltung mit zwei Schaltern, wobei die Pulsbreite zum Aktivieren eines Schalters während einer Startphase vorbestimmt variiert wird. Dadurch wird einem Überschwingen der Ausgangsspannung des Wandlers entgegen gewirkt.

Es ist folglich Aufgabe der Erfindung die Ausgangsspannung bzw. die an dem Leuchtmittel anliegende Spannung nach Aktivierung der Treiberschaltung so einzustellen, dass die genannten negativen Effekte nicht auftreten. Insbesondere bietet die Erfindung eine Möglichkeit, nach Aktivierung der Treiberschaltung, also in einer Startphase der Treiberschaltung bzw. des Leuchtmittelbetriebs eine entsprechende Ansteuerung zur Verfügung zu stellen. Bei dem erfindungsgemäßen Verfahren kann dann eine Überschreitung von zulässigen Betriebsparametern des Leuchtmittels vermieden werden.

Die Erfindung stellt zur Lösung des Problems eine Treiberschaltung, eine Leuchte und ein Verfahren zum Betrieb einer Treiberschaltung gemäß den unabhängigen Ansprüchen bereit. Weiterbildungen der Erfindung sind Gegenstand der abhängigen Ansprüche.

In einem ersten Aspekt wird eine Treiberschaltung für wenigstens ein Leuchtmittel bereitgestellt, insbesondere für eine oder mehrere LEDs, aufweisend: eine LLC-Schaltung mit einem mittels wenigstens zwei Schaltern getakteten Wechselrichter, der dazu eingerichtet ist, einen Resonanzkreis zu speisen, wobei der Resonanzkreis mit einer Primärwicklung eines Übertragers zum Übertragen von elektrischer Energie von der Primärwicklung zu einer Sekundärwicklung gekoppelt ist und das Leuchtmittel ausgehend von der Sekundärwicklung mit Strom versorgbar ist, eine Steuereinheit, die dazu eingerichtet ist, in einer Startphase nach einer Aktivierung der Treiberschaltung die Schalter des Wechselrichters derart anzusteuern, dass nach einem einfachen oder mehrfachen wechselseitigen Takten der Schalter die Taktung der Schalter für die Zeitdauer wenigstens einer wechselseitigen Taktung der Schalter ausgesetzt wird, bis ein Kriterium zur Beendigung der Startphase erfüllt ist.

Nach der Zeitdauer des Aussetzens kann eine erneute wechselseitige getaktete Ansteuerung der Schalter (LS, HS) erfolgen, vorzugsweise direkt und unmittelbar nach der Zeitdauer des Aussetzens.

Die Steuereinheit kann nach Beendigung der Startphase die Schalter des Wechselrichters in einem Normalbetrieb steuern, in dem die Schalter kontinuierlich getaktet werden.

Die Steuereinheit kann die Schalter des Wechselrichters in einem Burst- und/oder Puls-Weiten-Modulationsbetrieb ansteuern.

Die Treiberschaltung kann eine Leistungsfaktorkorrektur-Schaltung aufweisen, die den getakteten Wechselrichter elektrisch versorgen kann.

Die Steuereinheit kann eine Betriebsweise der Leistungsfaktor-Korrekturschaltung verändern, beispielsweise durch eine Veränderung der Soll-Ausgangsspannung der Leistungsfaktor-Korrekturschaltung und/oder eine Manipulation einer Rückführung eines der Leistungsfaktor-Korrekturschaltung rückgeführten Signals.

Die Steuereinheit kann durch eine Veränderung der Ansteuerung der Schalter des Wechselrichters und/oder der Veränderung der Betriebsweise der Leistungsfaktor-Korrekturschaltung eine an dem Leuchtmittel anliegende Spannung verringern.

Ausgehend von der Sekundärwicklung kann ein Gleichrichter und/oder ein Filter, insbesondere ein Rippelfilter, dem Leuchtmittel vorgeschaltet sein.

In dem Normalbetrieb kann die LLC-Schaltung eingeschwungen sein, wobei im Normalbetrieb die Frequenz der Taktung der Schalter des Wechselrichters eine Stellgröße sein kann, und wobei eine Frequenzregelung im Startbetrieb deaktiviert sein kann.

Das Kriterium kann eine Anzahl von Schaltzyklen und/oder eine bestimmte Zeitdauer nach der Aktivierung und/oder ein Wert einer der Steuereinheit zurückgeführten Rückführgröße sein.

Die Rückführgröße kann eine Spannung und/oder ein Strom bzw. ein diese/diesen widergebender Parameter sein.

Der Steuereinheit kann ein den Strom durch die LLC-Schaltung wiedergebendes Signal und/oder ein die an der Primärwicklung und/oder auf einer Sekundärseite des Übertragers, insbesondere an dem Leuchtmittel, anliegende Spannung wiedergebendes Signal als Rückführgröße zurückgeführt sein.

In einem weiteren Aspekt wird eine Leuchte bereitgestellt, aufweisend eine LED-Strecke und eine Treiberschaltung, wie sie vorstehend beschrieben ist, zur Versorgung der LED-Strecke mit Strom.

In noch einem weiteren Aspekt wird ein Verfahren zum Betreiben wenigstens eines Leuchtmittels, insbesondere wenigstens einer LED bereitgestellt, aufweisend: eine LLC-Schaltung mit einem mittels wenigstens zwei Schaltern getakteten Wechselrichter, der einen Resonanzkreis speist, wobei der Resonanzkreis mit einer Primärwicklung eines Übertragers zum Übertragen von elektrischer Energie von der Primärwicklung zu einer Sekundärwicklung gekoppelt ist und das Leuchtmittel ausgehend von der Sekundärwicklung mit Strom versorgt wird, eine Steuereinheit, die in einer Startphase nach einer Aktivierung der Treiberschaltung die Schalter des Wechselrichter derart ansteuert, dass nach einem einfachen oder mehrfachen wechselseitigen Takten der Schalter die Taktung der Schalter für die Zeitdauer wenigstens einer wechselseitigen Taktung der Schalter ausgesetzt wird, bis ein Kriterium zur Beendigung der Startphase erfüllt ist.

Die Erfindung wird nunmehr auch mit Blick auf die Figuren beschrieben.

Dabei zeigen
- Fig. 1: schematisch den Aufbau einer erfindungsgemäßen Treiberschaltung zur Versorgung eines Leuchtmittels;
- Fig. 2: ein exemplarisches Ausführungsbeispiel von Komponenten einer Treiberschaltung gemäß der Erfindung;
- Fig. 3: exemplarische Signalverläufe verschiedener Messgrößen einer Treiberschaltung ohne die erfindungsgemäße Lösung; und
- Fig. 4: exemplarische Signalverläufe verschiedener Messgrößen einer Treiberschaltung gemäß der Erfindung.

Zur Lösung des der Erfindung zugrundeliegenden Problems ist es vorgesehen, dass in einer definierten Startphase der LLC-Übertrager auf besondere Weise angesteuert wird. Wenigstens zwei Schalter eines getakteten Wechselrichters werden von einer Steuereinheit angesteuert, um den Wechselrichter zu takten. Der Wechselrichter ist dazu eingerichtet, einen Resonanzkreis der LLC-Schaltung zu speisen. Folglich wird also der LLC-Übertrager durch Ansteuerung der wenigstens zwei Schalter des Wechselrichters, insbesondere eines Halbbrückenwechselrichters, angesteuert.

Die Erfindung sieht dabei vor, dass in der Startphase die wenigstens zwei Schalter des Wechselrichters zumindest einmalig wechselseitig angesteuert werden und nach dem einfachen oder mehrfachen wechselseitigen Takten der Schalter die Taktung der Schalter für die Zeitdauer wenigstens einer wechselseitigen Taktung der Schalter ausgesetzt wird. Insbesondere kann also eine Anzahl von Zyklen vorgegeben werden, in denen die Schalter wechselseitig betrieben werden (dabei ist ein Zyklus als eine wechselseitige Ansteuerung der wenigstens zwei Schalter zu verstehen). Andererseits kann eine weitere Anzahl von Zyklen vorgesehen sein, in denen keine Ansteuerung der wenigstens zwei Schalter erfolgt.

Dabei kann es sein, dass der Steuereinheit, die die wenigstens zwei getakteten Schalter ansteuert, eine Information darüber zugeführt wird, welches Leuchtmittel am Ausgang der Treiberschaltung zu betreiben ist. Hierzu können an der Treiberschaltung oder an einem diese umfassenden Betriebsgerät Einstellmöglichkeiten vorgesehen sein. Bspw. kann vorgesehen sein, über einen einstellbaren oder austauschbaren Widerstand der Treiberschaltung eine Information über die angeschlossenen Leuchtmittel zuzuführen. Auch kann die Treiberschaltung dazu eingerichtet sein, vor oder in der Startphase Messungen durchzuführen oder ihr zugeführte Signale auszuwerten, die einen Aufschluss über das angeschlossene Leuchtmittel erlauben. Die Zeitdauer der Startphase kann auch fest vorgegeben sein, oder über einen oder mehrere Zyklen bzw. eine Zeitdauer, oder adaptiv anhand einer Rückführgröße wie bspw. einer Spannung oder eines Stroms bzw. durch einen diese/diesen widergebenden Parameter definiert sein. Die Rückführgröße kann dabei auf der Primärseite und/oder der Sekundärseite der Treiberschaltung von der Steuereinheit erfasst werden.

Während der Startphase wird gemäß einem zentralen Aspekt der Erfindung der Betrieb des LLC-Übertragers "burst"-artig durchgeführt bzw. in einem Pulsweiten-ModulationsBetrieb (PWM-Betrieb), bei dem wenigstens die Zeitdauer zwischen zwei wechselseitigen Ansteuerungen der wenigstens zwei Schalter des Wechselrichters einstellbar ist. Nach einem oder mehreren Schaltzyklen bzw. nach einem oder mehreren wechselseitigen Ansteuerungen der wenigstens zwei Schalter der LLC-Schaltung kann ein Schaltzyklus, bevorzugt jedoch mehrere Schaltzyklen, ausgelassen werden, bevor wieder eine erneute getaktete Ansteuerung der wenigstens zwei Schalter erfolgt.

Diese Ansteuerung durch die Steuereinheit hat den Vorteil, dass dadurch die Spannung über dem Leuchtmittel langsamer aufgebaut wird und so ein Lichtblitz bzw. eine Schädigung des Leuchtmittels durch einen zu hohen Strom/eine zu hohe Spannung vermieden wird. Der "Burst"-Betrieb bezeichnet dabei einen Betrieb, bei dem die Schalter des getakteten Wechselrichters bzw. der LLC-Schaltung über eine bestimmte Anzahl von Schaltzyklen wechselseitig angesteuert werden, während darauf eine vorbestimmte Zeit folgt, in der keine Ansteuerung vorliegt bzw. in der die Schalter des Wechselrichters deaktiviert bzw. nicht leitend geschaltet sind.

Das oben beschriebene Verfahren zur Absenkung der Ausgangsspannung bzw. der an dem Leuchtmittel bereitgestellten Spannung während der Startphase kann dadurch ergänzt werden, dass gezielt die Betriebsweise einer Leistungsfaktor-Korrekturschaltung (PFC-Schaltung) verändert wird. Die Leistungsfaktor-Korrekturschaltung ist dabei vorgesehen, um den Wechselrichter zu Speisen. Für die Leistungsfaktor-Korrekturschaltung ist typischerweise eine Ausgangsspannung (Soll-Ausgangsspannung) vorgegeben, die am Ausgang der Leistungsfaktor-Korrekturschaltung einzustellen ist. Entsprechend kann durch eine Veränderung dieser Soll-Ausgangsspannung bzw. durch Manipulation einer der PFC-Schaltung zugeführten Größe, die die Ausgangsspannung (als Ist-Spannung) widergibt und die von der Leistungsfaktor-Korrekturschaltung zur Anpassung der von ihr ausgegebenen Ausgangsspannung verwendet wird, die von der Leistungsfaktor-Korrekturschaltung ausgegebene Spannung/Leistung eingestellt/verändert werden.

Da so auch durch Anpassung der Betriebsweise der Leistungsfaktor-Korrekturschaltung eine Absenkung der an den Leuchtmitteln angelegten Spannung erfolgen kann, ist zu beachten, dass allein die Änderung der Betriebsweise der Leistungsfaktor-Korrekturschaltung im Allgemeinen nicht ausreicht, um eine ausreichende Absenkung der an das Leuchtmittel gelieferten Spannung und damit des durch das Leuchtmittel fließenden Stroms genug abzusenken, um die nachteiligen Effekte (Lichtblitz, (teilweise) Zerstörung des Leuchtmittels) zu vermeiden. Daher ist es erfindungsgemäß vorgesehen, die Ansteuerung der Schalter der LLC-Schaltung zu kombinieren mit der Absenkung der Ausgangsspannung der Leistungsfaktor-Korrekturschaltung bzw. der Eingangsspannung der LLC-Schaltung. Insgesamt können jedoch beide Aspekte getrennt eingesetzt werden, um das erfindungsgemäße Ziel zu erreichen.

Wie bereits ausgeführt, erfolgt der Betrieb des Leuchtmittels durch Speisung ausgehend von der LLC-Schaltung. Dabei ist zu verstehen, dass der Sekundärwicklung des Übertragers nachgeschaltet weitere passive und/oder aktive Schaltungselemente vorgesehen sein können, die dem Leuchtmittel folglich vorgeschaltet sind. Bei diesen Schaltungselementen kann es sich bspw. um einen AC/DC-Wandler, einen Gleichrichter und/oder einen Filter, insbesondere einen Rippelfilter, handeln. Durch die vorstehend genannten Maßnahmen kann folglich in der Startphase auch eine Belastung insbesondere von sekundärseitig vorgesehenen Schaltungselementen erreicht werden. So können dort eingesetzte Bauteile bspw. eine Induktivität des Filters/Rippelfilters entlastet werden, da entsprechend die anliegenden Anlaufströme (in-rush current) verringert werden. Im Ergebnis kann so insgesamt die Lebensdauer der Treiberschaltung erhöht werden.

Nachdem die Startphase beendet ist, d.h., nachdem bspw. ein Kriterium erfüllt ist, das ein Ende der Startphase signalisiert (bspw. das Ablaufen einer bestimmten Zeitdauer nach der Aktivierung der Treiberschaltung bzw. eine Anzahl von Zyklen, in denen die Schalter aktiviert, also wechselseitig angesteuert bzw. deaktiviert sind), wechselt die Treiberschaltung von dem Betrieb der Startphase zu einem Normalbetrieb. In diesem Normalbetrieb befindet sich die LLC-Schaltung in einem eingeschwungenen Zustand und die Frequenz der Taktung der Wechselrichteschalter dient als Stellgröße. In der Startphase ist diese Frequenzregelung deaktiviert.

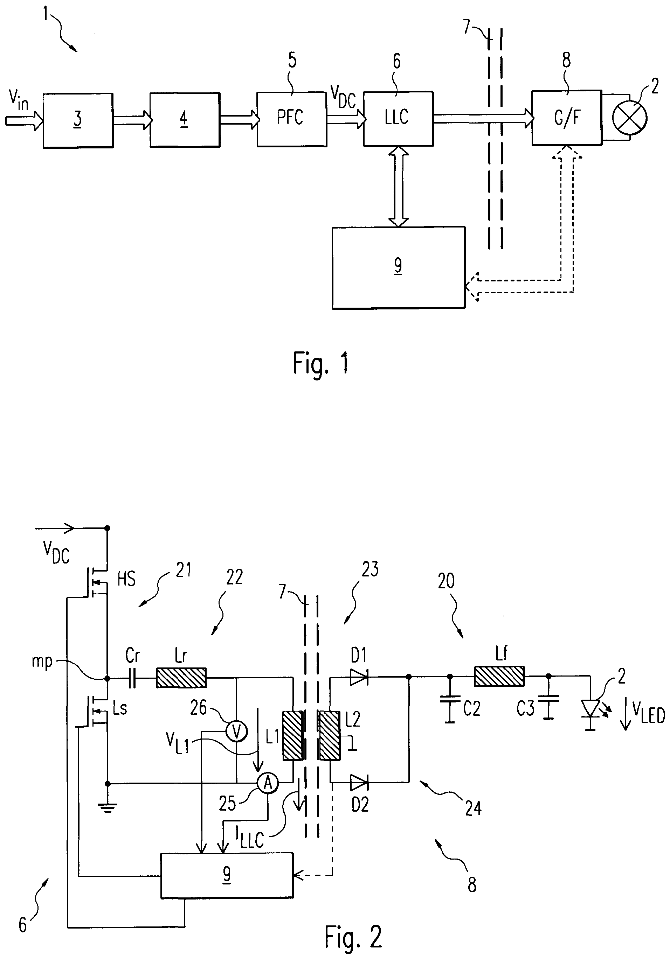

Fig. 1 zeigt schematisch den Aufbau einer Treiberschaltung 1 zum Betreiben eines Leuchtmittels 2, insbesondere einer LED-Strecke mit wenigstens einer LED. Die LEDs der LED-Strecke können in Serie, parallel oder in einer Serien- /Parallelschaltung angeordnet sein.

Die Treiberschaltung 1 wird vorzugsweise von einer Eingangsspannung Vᵢₙ z.B. in Form einer Wechselspannung bzw. ausgehend von der Netzspannung gespeist. Die Eingangsspannung Vᵢₙ wird an der Eingangsseite der Treiberschaltung 1 vorzugsweise einem Gleichrichter 3 und/oder einem Filter (bspw. einem EMI-Filter, electromagnetic interference filter) 4 zugeführt, der elektromagnetische Störungen ausfiltert.

Die gleichgerichtete und ggf. gefilterte Eingangsspannung der Treiberschaltung 1 wird dann vorzugsweise einer Leistungsfaktor-Korrekturschaltung (PFC) 5 zugeführt, die ausgangsseitig eine Versorgungsspannung V_{DC}, insbesondere eine Busspannung, erzeugt. Die Versorgungsspannung V_{DC} ist vorzugsweise eine Gleichspannung bzw. eine näherungsweise konstante Busspannung, die ggf. eine Restwelligkeit aufweist. Bspw. kann es sich bei der Versorgungsspannung V_{DC} um eine Gleichspannung (DC-Spannung) von 400V handeln.

Alternativ kann die Versorgungsspannung V_{DC} auch eine Gleichspannung bzw. eine konstante Spannung wie z.B. eine Batteriespannung sein. In diesem Fall kann auf den Gleichrichter 3, den optionalen Filter 4 und/oder die Leistungsfaktor-Korrekturschaltung 5 verzichtet werden.

Die Versorgungsspannung V_{DC} versorgt eine LLC-Schaltung 6. Bei der LLC-Schaltung 6 handelt es sich dabei vorzugsweise um einen DC/AC-Wandler. Die LLC-Schaltung 6 umfasst einen Resonanzkreis (LLC-Resonanzkreis), wobei eine Induktivität der LLC-Schaltung als Primärwicklung für den Übertrager dient. Der Übertrager ist vorgesehen, um Strom über eine galvanische Barriere 7 von einer Primärseite des Übertragers auf eine Sekundärseite des Übertragers zu übertragen. Die LLC-Schaltung 6 ist also ein getakteter Wandler, bei dem der LLC-Resonanzkreis ausgehend von einem Wechselrichter mit wenigstens zwei Schaltern gespeist ist. Auf der Sekundärseite der galvanisch trennenden Barriere 7 ist ein AC/DC-Wandler 8 und insbesondere ein Gleichrichter gezeigt, der jedoch auch noch andere Komponenten wie bspw. den Filter umfassen kann. Die Schalter werden durch eine Steuereinheit 9 angesteuert, die entsprechend die Schalter vorzugsweise alternierend ein, d.h. in ihren leitenden Zustand, bzw. aus, d.h. in ihren nicht-leitenden Zustand, schaltet. Die Sekundärseite des Übertragers versorgt eine Last und insbesondere das Leuchtmittel 2.

Die galvanische Barriere 7 kann eine SELV-Barriere (Sicherheitskleinspannungs-Barriere) sein und wird durch den Übertrager der LLC-Schaltung 6 überwunden, wobei der Übertrager der LLC-Schaltung 6 insbesondere als Transformator ausgestaltet sein kann. Die Übertragung elektrischer Energie von der Primärseite zur Sekundärseite des Übertragers über die galvanische Barriere 7 hinweg wird ebenfalls durch die Steuereinheit 9 durch Ansteuerung der Schalter gesteuert bzw. geregelt.

Die Steuereinheit 9 ist vorzugsweise auf der Primärseite der galvanischen Barriere 7 angeordnet, kann aber auch auf der Sekundärseite angeordnet sein. Zur Einstellung eines gewünschten Stroms durch das Leuchtmittel 2 wird dann von der Steuereinheit 9 eine elektrische Größe primärseitig (Doppelpfeil) und/oder sekundärseitig (Doppelpfeil gepunktet) gemessen. Auf Basis dieser zurückgeführten Werte steuert die Steuereinheit 9 dann den Wechselrichter bzw. die Schalter des Wechselrichters der LLC-Schaltung 6 derart an, dass der gewünschte Strom durch das Leuchtmittel fließt. Die Steuereinheit sorgt dafür, dass die Last in Form einer Lichtquelle insbesondere in Form einer LED-Strecke mit dem gewünschten Strom versorgt wird. Fig. 2 zeigt ein Ausführungsbeispiel der LLC-Schaltung 6 zur Versorgung des Leuchtmittels 2, hier dargestellt als LED. Dabei zeigt Fig. 2 ein Ausführungsbeispiel für den AC/DC-Wandler 8 aus Fig. 1 sowie einen diesem nachgeschalteten Filter 20. Wie in Fig. 1 gezeigt, versorgt die Versorgungsspannung V_{DC} die LLC-Schaltung 6 der Treiberschaltung 1. Eingangsseitig ist in der LLC-Schaltung 6 ein getakteter Wechselrichter vorgesehen. In Fig. 2 ist bspw. ein Wechselrichter in Form einer Halbbrückenschaltung 21 gezeigt. Die Halbbrückenschaltung 21 ist von der Versorgungsspannung V_{DC} versorgt und weist vorzugsweise einen potentialniedrigeren Schalter LS und einen potentialhöheren Schalter HS auf. Dabei ist zu verstehen, dass die getaktete Schaltung zumindest einen Schalter aufweist. Als Wechselrichter mit einem Schalter kann bspw. ein Flyback-Wandler zum Einsatz kommen.

Die Schalter LS, HS der Halbbrückenschaltung 21 können als Transistoren, z.B. FET- oder MOSFET, ausgestaltet sein. Die Schalter LS, HS können durch Steuersignale, die von der Steuereinheit 9 ausgegeben werden, gesteuert werden. Der potentialniedrigere Schalter LS ist mit einer primärseitigen Masse verbunden. Am potentialhöheren Schalter HS der Halbbrückenschaltung 21 liegt dagegen die Eingangsspannung V_{DC} an.

Am Mittenpunkt mp der Halbbrückenschaltung 21, d.h. zwischen den beiden Schaltern LS, HS, ist der Resonanzkreis 22 in Form eines Serienresonanzkreises angeschlossen, bestehend aus einem Resonanzkondensator Cr und einer Resonanzinduktivität Lr. Zusätzlich ist in dem Resonanzkreis eine Wicklung L1 vorgesehen. Alternativ kann erfindungsgemäß auch ein Parallelresonanzkreis am Mittenpunkt mp der Halbbrückenschaltung 21 verbunden sein. Der Resonanzkreis 22 ist zwischen der primärseitigen Masse und dem Mittenpunkt mp der Halbbrückenschaltung vorgesehen. Der Resonanzkreis 22 wird in diesem Fall als LLC-Resonanzkreis bezeichnet. Der Resonanzkondensator Cr und die Resonanzinduktivität Lr bilden vorzugsweise einen LC-Resonanzkreis.

Die Spule L1 ist vorzugsweise für die Primärwicklung eines Übertragers 23 in Form z.B. eines Transformators, vorgesehen. Der in Fig. 2 gezeigte Übertrager 23 umfasst die Primärwicklung L1, also die Wicklung L1 des LLC-Resonanzkreises, und eine mit dieser Primärwicklung L1 elektromagnetisch gekoppelte Sekundärwicklung L2. Durch die transformatorische Kopplung zwischen der Wicklung L1 und der Sekundärwicklung L2 erfolgt eine Energieübertragung über die galvanische Barriere 7 hinweg, wenn der Transformator entsprechend angesteuert ist, insbesondere durch Steuerung der Taktung der Schalter HS, LS durch die Steuereinheit 9. Der Übertrager 23 kann zusätzlich auch eine Streuinduktivität und eine Hauptinduktivität aufweisen (nicht gezeigt). Die Streuinduktivität kann in Serie zu der Wicklung L1 vorgesehen sein. Die Hauptinduktivität kann zum Führen des Magnetisierungsstroms dienen und vorzugsweise parallel zur Wicklung L1 angeordnet sein.

Durch die Sekundärwicklung L2 des Übertragers 23 fließt im Betrieb vorzugsweise ein Wechselstrom (AC-Strom). Die Spannung der Sekundärwicklung L2 wird anschließend vorzugsweise einem Gleichrichter 24 zugeführt, der im dargestellten Beispiel durch die Dioden D1 und D2 gebildet wird. Die Sekundärwicklung L2 des Übertragers 23 weist zusätzlich eine Anzapfung bzw. Abzapfung auf, die insbesondere als Mittenpunkt-Abzapfung vorgesehen sein kann. Diese Mittenpunkt-Abzapfung bildet ein Potential des Gleichrichters 24 bzw. ein Potential der an der LED-Strecke anliegenden Spannung V_{LED} ab.

Eine Seite der Sekundärwicklung L2 ist dabei mit einer Anode der ersten Diode D1 verbunden, während die andere Seite der Sekundärwicklung L2 mit der Anode der zweiten Diode D2 verbunden ist. Die jeweiligen Katoden der Dioden D1, D2 sind zusammengeführt und bilden ein Ausgangspotential des Gleichrichters 24. Der Gleichrichter 24 kann ausgangsseitig mit einem Speicher- oder Filterkondensator C2 gekoppelt sein. Als Speicherkondensator kann insbesondere ein Elektrolytkondensator (ELKO) eingesetzt werden.

Um eine von dem Gleichrichter 24 ausgegebene Spannung zu filtern und insbesondere eine Rippelfilterung bereitzustellen, ist dem Kondensator C2 eine Induktivität Lf nachgeschaltet, die wiederum mit einem weiteren Kondensator C3 verbunden ist. Die Kondensatoren C2 und C3 sind dabei an ihrer potentialhöheren Seite mit der Induktivität Lf verbunden, während sie mit ihrer potentialniedrigeren Seite mit der sekundärseitigen Masse verbunden sind. Das sekundärseitige Massepotential kann sich von dem primärseitigen unterscheiden.

An der Primärseite der in Fig. 2 dargestellten LLC-Schaltung können Mittel 25 zum Messen eines primärseitigen Stroms bzw. des Stroms durch den Resonanzkreis 22 vorgesehen sein. Vorzugsweise sind die Mittel 25 zum Messen des Stroms I_{LLC} durch den Resonanzkreis 22 als Messwiderstand (Shunt) ausgestaltet, der in Fig. 2 nicht gezeigt ist. Der Messwiderstand kann in bekannter Weise in Serie zu der Wicklung L1 des Übertragers 23 geschaltet sein. Wenn an dem Messwiderstand eine anliegende Spannung durch die Steuereinheit 9 erfasst wird, ist die Steuereinheit 9 in der Lage, den Strom durch den Resonanzkreis 22 zu erfassen. Entsprechend kann die Steuereinheit 9 also eine Steuerung der Schalter LS, HS der Halbbrücke 21 durchführen.

Weiter können auf der Primärseite der LLC-Schaltung Mittel 26 zum Messen einer Spannung V_{L1} über die primärseitige Wicklung L1 vorgesehen sein. Gemäß einer Ausführungsform kann die Spannungsmessung dadurch erfolgen, dass beide Seiten der Primärwicklung L1 so mit der Steuereinheit 9 verbunden sind, dass diese die Spannung an der Induktivität L1 erfassen kann. Insgesamt kann der Steuereinheit 9 also eine direkte Information über die an der Wicklung L1 anliegende Spannung V_{L1} zugänglich sein. Alternativ kann zwischen den Anschlüssen der Wicklung L1 auch ein Spannungsteiler (nicht gezeigt) vorgesehen sein und der Steuereinheit 9 kann entsprechend eine Teilspannung des Spannungsteilers zugeführt werden, die dann eine an der Wicklung L1 anliegende Spannung V_{L1} als Ist-Signal für die Spannung widergeben kann.

Selbstverständlich kann auch vorgesehen sein, dass die Steuereinheit 9 auf der Sekundärseite der in Fig. 2 dargestellten Schaltung einen Parameter, der den Strom und/oder die Spannung auf der Sekundärseite widergibt, erfasst. Der Parameter kann bspw. über eine Widerstandsoder Kondensator-Schaltung über die galvanische Barriere 7 zurückgeführt sein. So kann die Steuereinheit 9 insbesondere eine auf die Sekundärseite übertragene Spannung bzw. einen Strom erfassen. Auch hier kann entsprechend eine Ansteuerung der Schalter LS, HS der Halbbrücke 21 durch die Steuereinheit 9 erfolgen (siehe Andeutung durch den gestrichelten Pfeil in Fig. 2).

Wie bereits ausgeführt, wird also erfindungsgemäß in der Startphase, d.h. nach Aktivierung der Treiberschaltung, eine Ansteuerung der Wechselrichterschalter so ausgeführt, dass nach einer bzw. mehrerer wechselseitiger Ansteuerungen der Schalter eine Pause erfolgt, die wenigstens so lange ist, wie die für die wechselseitige Ansteuerung der Schalter notwendige Zeitdauer.

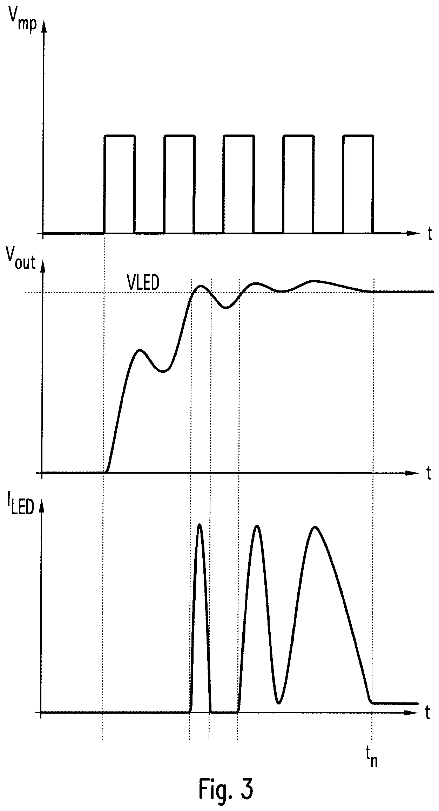

In Fig. 3 ist schematisch gezeigt, wie sich der Leuchtmittel-Strom I_{LED} bzw. die an das Leuchtmittel ausgegebene Spannung V_{OUT} verhält, wenn in der Startphase keine erfindungsgemäße Ansteuerung der Schalter des Wechselrichters erfolgt. Die obere Kurve der Fig. 3 stellt dabei die an dem Mittenpunkt mp der Halbbrücke 22 erfasste Spannung Vₘₚ dar, die aus einer gleichförmigen PWM-Ansteuerung der Schalter LS, HS durch die Steuereinheit 9 resultiert.

In dem mittleren Diagramm ist eine maximale, für das Leuchtmittel zulässige Spannung V_{LED} eingezeichnet. Klar zu sehen ist, dass sich bei einer gleichförmigen Taktung der Wechselrichterschaltung 21 die Spannung V_{OUT} aufschaukelt und in Teilbereichen über die maximal zulässige Leuchtmittelspannung V_{LED} hinausschießt. Entsprechend ist in dem unteren Diagramm zu sehen, dass ein extrem erhöhter Strom durch das Leuchtmittel I_{LED} zu messen ist. Der Strom der eigentlich an dem Leuchtmittel einzustellen wäre bzw. die einzustellende Ausgangsspannung V_{OUT} ist nach dem Zeitpunkt tₙ zu erkennen, der den Beginn des Normalbetriebs kennzeichnet.

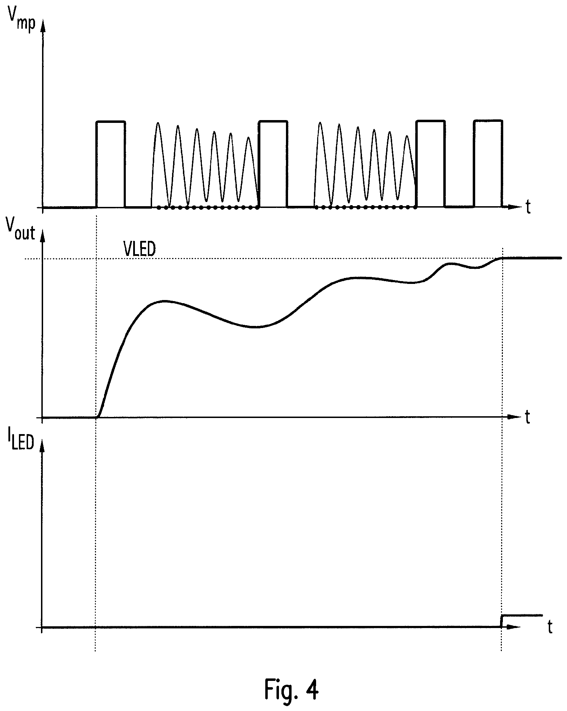

Entsprechend ist in Fig. 4 schematisch gezeigt, wie sich eine erfindungsgemäße Ansteuerung der Schalter des Wechselrichters 21 auswirkt. In dem oberen Diagramm ist dabei wiederum eine Ansteuerung der Schalter gezeigt, wobei hier zunächst nach einem Einschaltzyklus ein erneutes Einschalten erst wieder dann erfolgt, wenn für eine Zeitdauer von drei Zyklen keine Taktung erfolgt ist. Die an dem Mittenpunkt mp gemessene Spannung Vₘₚ zeigt dabei auch die aus der Schwingung des Resonanzkreises resultierende Fluktuation der Spannung. Klar zu sehen ist, dass in dem mittleren Diagramm die Ausgangsspannung V_{OUT} wesentlich langsamer ansteigt und somit die LLC-Schaltung langsamer geladen wird. Auch ist zu erkennen, dass die Ausgangsspannung V_{OUT} nicht über die zulässige Betriebsspannung für die Leuchtmittel V_{LED} hinausgeht. Insofern kommt es nicht zu einem Lichtblitz und das Leuchtmittel wird auch nicht beschädigt.

In dem unteren Diagramm von Fig. 4 ist zudem gezeigt, dass es nicht zu einem Stromdurchbruch an dem Leuchtmittel kommt. Da sich die Ausgangsspannung an dem Leuchtmittel relativ langsam der zulässigen Spannung V_{LED} für das Leuchtmittel annähert, erfolgt erst nach dem Zeitpunkt tₙ ein Anstieg des Stroms durch das Leuchtmittel, wie er für den Betrieb vorgesehen ist. Nachdem die an dem Leuchtmittel einzustellende Spannung erreicht ist, ist die Startphase beendet und die Steuereinheit wird im Normalbetrieb die Schalter des Wechselrichters entsprechend einer Frequenzsteuerung ansteuern.

Bei einer Kombination der Absenkung der Busspannung, d.h., der Eingangsspannung der LLC-Schaltung 6 bzw. der Ausgangsspannung der Leistungsfaktor-Korrekturschaltung 5, und einem PWM- bzw. Burst-Betrieb, kann die Spannung V_{OUT}, langsam nominal auf die gewünschte Spannung VLED angehoben werden, wenn die Busspannung V_{DC} ausgehend von einer verringerten Amplitude langsam auf den Sollwert erhöht wird.

Dabei ist etwa in dem Bereich, in dem die Busspannung den Nominalwert erreicht, auch der PWM-Betrieb mit gesperrter Frequenzregelung wieder aufgehoben und die Frequenzregelung des Normalbetriebs kann eingesetzt werden. Bei der Regelung der an das Leuchtmittel gelieferten Spannung in der Startphase handelt es sich dabei also um eine geschlossene Regelschleife (closedloop).

## Patentansprüche

1. Treiberschaltung (1) für wenigstens ein Leuchtmittel (2), insbesondere für eine oder mehrere LEDs, aufweisend:
- eine LLC-Schaltung (6) mit einem mittels wenigstens zwei Schaltern (LS, HS) getakteten Wechselrichter (21), der dazu eingerichtet ist, einen Resonanzkreis (22) zu speisen,
wobei der Resonanzkreis (22) mit einer Primärwicklung (L1) eines Übertragers (23) zum Übertragen von elektrischer Energie von der Primärwicklung (L1) zu einer Sekundärwicklung (L2) gekoppelt ist und das Leuchtmittel (2) ausgehend von der Sekundärwicklung (L2) mit Strom versorgbar ist, und
- eine Steuereinheit (9), die dazu eingerichtet ist, in einer Startphase nach einer Aktivierung der Treiberschaltung (1) die Schalter (LS, HS) des Wechselrichters (21) derart anzusteuern, dass nach einem einfachen oder mehrfachen wechselseitigen Takten der Schalter (LS, HS) die Taktung der Schalter (LS, HS) für die Zeitdauer wenigstens einer wechselseitigen Taktung der Schalter (LS, HS) ausgesetzt wird, bis ein Kriterium zur Beendigung der Startphase erfüllt ist.

2. Treiberschaltung (1) nach Anspruch 1, wobei nach der Zeitdauer des Aussetzens eine erneute wechselseitige getaktete Ansteuerung der Schalter (LS, HS) erfolgt.

3. Treiberschaltung (1) nach Anspruch 1 oder 2, wobei die Steuereinheit (9) dazu eingerichtet ist, nach Beendigung der Startphase die Schalter (LS, HS) des Wechselrichters (21) in einem Normalbetrieb zu steuern, indem die Steuereinheit (9) die Schalter (LS, HS) kontinuierlich taktet.

4. Treiberschaltung (1) nach einem der vorstehenden Ansprüche, wobei die Steuereinheit (9) dazu eingerichtet ist, die Schalter (LS, HS) des Wechselrichters (21) in einem Burst- und/oder Puls-Weiten-Modulationsbetrieb anzusteuern.

5. Treiberschaltung (1) nach einem der vorstehenden Ansprüche, wobei die Treiberschaltung (1) eine Leistungsfaktor-Korrekturschaltung (5) aufweist, die dazu eingerichtet ist, den getakteten Wechselrichter (21) elektrisch zu versorgen.

6. Treiberschaltung (1) nach Anspruch 5, wobei die Steuereinheit (9) dazu eingerichtet ist, eine Betriebsweise der Leistungsfaktor-Korrekturschaltung (5) zu verändern, beispielsweise durch eine Veränderung der Soll-Ausgangsspannung der Leistungsfaktor-Korrekturschaltung (5) und/oder eine Manipulation einer Rückführung eines der Leistungsfaktor-Korrekturschaltung rückgeführten Signals.

7. Treiberschaltung (1) nach einem der vorstehenden Ansprüche, wobei die Steuereinheit (9) dazu eingerichtet ist, durch eine Veränderung der Ansteuerung der Schalter (LS, HS) des Wechselrichters (21) und/oder der Veränderung der Betriebsweise der Leistungsfaktor-Korrekturschaltung (5) eine an dem Leuchtmittel anliegende Spannung zu verringern.

8. Treiberschaltung (1) nach einem der vorstehenden Ansprüche, wobei ausgehend von der Sekundärwicklung (L2) ein Gleichrichter und/oder ein Filter (8), insbesondere ein Rippelfilter, dem Leuchtmittel (2) vorgeschaltet ist.

9. Treiberschaltung (1) nach einem der vorstehenden Ansprüche, wobei in dem Normalbetrieb die LLC-Schaltung (6) eingeschwungen ist, wobei im Normalbetrieb die Frequenz der Taktung der Schalter (LS, HS) des Wechselrichters (21) eine Stellgröße ist, und wobei eine Frequenzregelung im Startbetrieb deaktiviert ist.

10. Treiberschaltung (1) nach einem der vorstehenden Ansprüche, wobei das Kriterium eine Anzahl von Schaltzyklen und/oder eine bestimmte Zeitdauer nach der Aktivierung und/oder ein Wert einer der Steuereinheit zurückgeführten Rückführgröße ist.

11. Treiberschaltung (1) nach Anspruch 9, wobei die Rückführgröße eine Spannung und/oder ein Strom bzw. ein diese/diesen widergebenden Parameter ist.

12. Treiberschaltung (1) nach einem der vorstehenden Ansprüche, wobei der Steuereinheit (9) ein den Strom durch die LLC-Schaltung wiedergebendes Signal und/oder ein die an der Primärwicklung (L1) und/oder auf der Sekundärseite des Übertragers (23), insbesondere an dem Leuchtmittel, anliegende Spannung wiedergebendes Signal als Rückführgröße zurückgeführt ist.

13. Leuchte, aufweisend eine LED-Strecke und eine Treiberschaltung (1) gemäß einem der Ansprüche 1 bis 11 zur Versorgung des Leuchtmittels (2) mit Strom.

14. Verfahren zum Betreiben wenigstens eines Leuchtmittels, insbesondere wenigstens einer LED, aufweisend:
- eine LLC-Schaltung (6) mit einem mittels wenigstens zwei Schaltern (LS, HS) getakteten Wechselrichter (21), der einen Resonanzkreis (22) speist,
wobei der Resonanzkreis (22) mit einer Primärwicklung (L1) eines Übertragers (23) zum Übertragen von elektrischer Energie von der Primärwicklung (L1) zu einer Sekundärwicklung (L2) gekoppelt ist und das Leuchtmittel (2) ausgehend von der Sekundärwicklung (L2) mit Strom versorgt wird,
- eine Steuereinheit (9), die in einer Startphase nach einer Aktivierung der Treiberschaltung (1) die Schalter (LS, HS) des Wechselrichters (21) derart ansteuert, dass nach einem einfachen oder mehrfachen wechselseitigen Takten der Schalter (LS, HS) die Taktung der Schalter (LS, HS) für die Zeitdauer wenigstens einer wechselseitigen Taktung der Schalter (LS, HS) ausgesetzt wird, bis ein Kriterium zur Beendigung der Startphase erfüllt ist.

15. Verfahren nach Anspruch 14, wobei nach der Zeitdauer des Aussetzens eine erneute wechselseitige getaktete Ansteuerung der Schalter (LS, HS) erfolgt.

## Claims

1. A driver circuit (1) for at least one lighting means (2), in particular, for one or more LEDs, having:
- an LLC circuit (6) with an inverter (21), which is clocked by means of at least two switches (LS, HS), which is configured to supply a resonant circuit (22), wherein the resonant circuit (22) is coupled to a primary winding (L1) of a transformer (23) for transforming electrical energy from the primary winding (L1) to a secondary winding (L2) and the lighting means (2) can be supplied with current starting from the secondary winding (L2), and
- a control unit (9), which is configured, to control the switches (LS, HS) of the inverter (21) after an activation of the driver circuit (1) during a start phase, in such a way that after a single or after multiple alternating clocking of the switches (LS, HS), the clocking of the switches (LS, HS) is suspended for the duration of at least one alternating clocking of the switches (LS, HS), until a criterion for ending the start phase is satisfied.

2. The driver circuit (1) according to Claim 1, wherein after the duration of the suspension a new alternating clocked control of the switches (LS, HS) takes place.

3. The driver circuit (1) according to Claim 1 or 2, wherein the control unit (9) is configured to control the switches (LS, HS) of the inverter (21) after ending the start phase in a normal operation, by the control unit (9) continuously clocking the switches (LS, HS).

4. The driver circuit (1) according to any one of the preceding claims, wherein the control unit (9) is configured to control the switches (LS, HS) of the inverter (21) in a burst- and/or pulse-width modulation operation.

5. The driver circuit (1) according to any one of the preceding claims, wherein the driver circuit (1) has a power factor correction circuit (5), which is configured to electrically supply the clocked inverter (21).

6. The driver circuit (1) according to Claim 5, wherein the control unit (9) is configured, to change an operating mode of the power factor correction circuit (5), for example, by means of a change in the target output voltage of the power factor correction circuit (5) and/or a manipulation of a feedback of a signal fed back to the power factor correction circuit.

7. The driver circuit (1) according to any one of the preceding claims, wherein the control unit (9) is configured to reduce a voltage applied to the lighting means by changing the control of the switches (LS, HS) of the inverter (21) and/or by changing the operating mode of the power factor correction circuit (5).

8. The driver circuit (1) according to any one of the preceding claims, wherein starting from the secondary winding (L2) a rectifier and/or a filter (8), in particular, a ripple filter, is connected upstream of the lighting means (2).

9. The driver circuit (1) according to any one of the preceding claims, wherein in the normal operation the LLC circuit (6) has engaged, wherein in the normal operation the frequency of the clocking of the switches (LS, HS) of the inverter (21) is a manipulated variable, and wherein a frequency control is deactivated in the starting operation.

10. The driver circuit (1) according to any one of the preceding claims, wherein the criterion is a number of switching cycles and/or a specific time period after the activation and/or a value of a feedback variable fed back to the control unit.

11. The driver circuit (1) according to Claim 9, wherein the feedback variable is a voltage and/or a current or a parameter that reflects said voltage or current.

12. The driver circuit (1) according to any one of the preceding claims, wherein a signal that reflects the current through the LLC circuit and/or signal that reflects the voltage applied to the primary winding (L1) and/or to the secondary side of the transformer (23), in particular to the lighting means is fed back to the control unit (9) as a feedback variable.

13. A lighting means, having an LED series and a driver circuit (1) according to any one of Claims 1 to 11 for supplying the lighting means (2) with current.

14. A method for operating at least one lighting means, in particular, at least one LED, having:
- an LLC circuit (6) with an inverter (21), which is clocked by means of at least two switches (LS, HS), which supplies a resonant circuit (22), wherein the resonant circuit (22) is coupled to a primary winding (L1) of a transformer (23) for transforming electrical energy from the primary winding (L1) to a secondary winding (L2) and the lighting means (2) is supplied with current starting from the secondary winding (L2),
- a control unit (9), which controls the switches (LS, HS) of the inverter (21) after an activation of the driver circuit (1) during a start phase, in such a way that after a single or after multiple alternating clocking of the switches (LS, HS), the clocking of the switches (LS, HS) is suspended for the duration of at least one alternating clocking of the switches (LS, HS), until a criterion for ending the start phase is satisfied.

15. The method according to Claim 14, wherein after the duration of the suspension a new alternating clocked control of the switches (LS, HS) takes place.

## Revendications

1. Circuit pilote (1) pour au moins un moyen d'éclairage (2), plus particulièrement pour une ou plusieurs LED, comprenant :
- un circuit LLC (6), avec un onduleur (21) cadencé à l'aide d'au moins deux commutateurs (LS, HS), qui est conçu pour alimenter un circuit de résonance (22), dans lequel le circuit de résonance (22) est couplé avec un enroulement primaire (L1) d'un transmetteur (23) pour la transmission d'énergie électrique de l'enroulement primaire (L1) à un enroulement secondaire (L2), et le moyen d'éclairage (2) peut être alimenté en courant à partir de l'enroulement secondaire (L2) et
- une unité de commande (9), qui est conçue, pour contrôler les commutateurs (LS, HS) de l'onduleur (21), dans une phase de démarrage après une activation du circuit pilote (1), de façon à ce que, après un cadencement alterné simple ou multiple des commutateurs (LS, HS), le cadencement des commutateurs (LS, HS) soit exposé, pendant cette durée, à au moins un cadencement alterné des commutateurs (LS, HS), jusqu'à ce qu'un critère de terminaison de la phase de démarrage soit rempli.

2. Circuit pilote (1) selon la revendication 1, dans lequel, après la durée de l'exposition, un nouveau cadencement alterné des commutateurs (Ls, HS) a lieu.

3. Circuit pilote (1) selon la revendication 1 ou 2, dans lequel l'unité de commande (9) est conçue pour contrôler, après la terminaison de la phase de démarrage, les commutateurs (LS, HS) de l'onduleur (21) en mode de fonctionnement normal, l'unité de commande (9) cadençant les commutateurs (LS, HS) de manière continue.

4. Circuit pilote (1) selon l'une des revendications précédentes, dans lequel l'unité de commande (9) est conçue pour contrôler les commutateurs (LS, HS) de l'onduleur (21) dans un mode de modulation par salves et/ou par largeurs d'impulsions..

5. Circuit pilote (1) selon l'une des revendications précédentes, dans lequel le circuit pilote (1) comprend un circuit de correction de facteur de puissance (5) qui est conçu pour alimenter électriquement l'onduleur (21) cadencé.

6. Circuit pilote (1) selon la revendication 5, dans lequel l'unité de commande (9) est conçue pour modifier un mode de fonctionnement du circuit de correction de facteur de puissance (5), par exemple à l'aide d'une modification de la tension de sortie de consigne du circuit de correction de facteur de puissance (5) et/ou d'une manipulation d'un retour d'un signal retourné au circuit de correction de facteur de puissance.

7. Circuit pilote (1) selon l'une des revendications précédentes, dans lequel l'unité de commande (9) est conçue pour réduire, par une modification du contrôle des commutateurs (LS, HS) de l'onduleur (21) et/ou de la modification du mode de fonctionnement du circuit de correction de facteur de puissance (5), une tension appliquée au moyen d'éclairage.

8. Circuit pilote (1) selon l'une des revendications précédentes, dans lequel, à partir de l'enroulement secondaire (L2), un redresseur et/ou un filtre (8), plus particulièrement un filtre d'ondulations, est branché en amont du moyen d'éclairage (2).

9. Circuit pilote (1) selon l'une des revendications précédentes, dans lequel, en mode de fonctionnement normal, le circuit LLC (6) est en régime d'oscillation permanent, dans lequel, en mode de fonctionnement normal, la fréquence du cadencement des commutateurs (LS, HS) de l'onduleur (21) est une grandeur de réglage et dans lequel une régulation de la fréquence est désactivée en mode de fonctionnement de démarrage.

10. Circuit pilote (1) selon l'une des revendications précédentes, dans lequel le critère est un nombre de cycles de commutation et/ou une durée déterminée après l'activation et/ou une valeur de la grandeur de retour retournée à l'unité de commande.

11. Circuit pilote (1) selon la revendication 9, dans lequel la grandeur de retour est une tension et/ou un courant resp. un paramètre reproduisant celle-ci/celui-ci.

12. Circuit pilote (1) selon l'une des revendications précédentes, dans lequel, à l'unité de commande (9), est retourné un signal reproduisant le courant à travers le circuit LLC et/ou un signal reproduisant la tension appliquée à l'enroulement primaire (L1) et/ou sur le côté secondaire du transmetteur (23), plus particulièrement au moyen d'éclairage, en tant que grandeur de retour.

13. Luminaire comprenant une chaîne de LED et un circuit pilote (1) selon l'une des revendications 1 à 11 pour l'alimentation du moyen d'éclairage (2) en courant.

14. Procédé d'exploitation d'au moins un moyen d'éclairage, plus particulièrement d'une LED, comprenant :
- un circuit LLC (6) avec un onduleur (21) cadencé au moyen d'au moins deux commutateurs (LS, HS), qui alimente un circuit de résonance (22),
dans lequel le circuit de résonance (22) est couplé avec un enroulement primaire (L1) d'un transmetteur (23) pour la transmission d'une énergie électrique de l'enroulement primaire (L1) à un enroulement secondaire (L2) et le moyen d'éclairage (2) est alimenté en courant à partir de l'enroulement secondaire (L2),
- une unité de commande (9), qui contrôle, dans une phase de démarrage, après une activation du circuit pilote (1), les commutateurs (LS, HS) de l'onduleur (21) de façon à ce que, après un cadencement alterné simple ou multiple des commutateurs (LS, HS), le cadencement des commutateurs (LS, HS) soit exposé, pendant cette durée, à au moins un cadencement alterné des commutateurs (LS, HS), jusqu'à ce qu'un critère de terminaison de la phase de démarrage soit rempli.

15. Procédé selon la revendication 14, dans lequel, après la durée de l'exposition, un nouveau contrôle cadencé alterné des commutateurs (LS, HS) a lieu.
